# EUROPÄISCHE PATENTSCHRIFT

(11) **EP 0 623 824 B1**
(45) Veröffentlichungstag und Bekanntmachung des Hinweises auf die Patenterteilung: **06.11.1996**
(21) Anmeldenummer: 93107287.0
(22) Anmeldetag: 05.05.1993
(51) Int. Cl.: G01P 15/08, G01P 15/125

(54) **Mikromechanische Beschleunigungsmessvorrichtung und Verfahren zu deren Herstellung**
Micro-machined accelerometer and method of its manufacture
Accéléromètre micro-usine et procédé pour sa fabrication

(43) Veröffentlichungstag der Anmeldung: 09.11.1994
(73) Patentinhaber: LITEF GmbH, D-79115 Freiburg (DE)
(72) Erfinder: Gessner, Thomas, Prof. Dr., O-9003 Chemnitz (DE); Hafen, Martin, W-7210 Rottweil (DE); Handrich, Eberhard, Dr., W-7815 Kirchzarten (DE); Leinefelder, Peter, W-7801 Ehrenkirchen (DE); Ryrko, Bruno, W-7810 Denzlingen (DE); Vetter, Egbert, Dr., O-9374 Gelenau/Sachsen (DE); Wiemer, Maik, O-9103 Limbach Oberfrohna (DE)
(74) Vertreter: TER MEER - MÜLLER - STEINMEISTER & PARTNER

(56) Entgegenhaltungen:
- EP-A- 0 369 352
- DE-A- 3 742 385
- US-A- 4 435 737
- US-A- 4 694 687
- US-A- 5 095 401

## Beschreibung

Die Erfindung betrifft eine mikromechanische Beschleunigungsmeßvorrichtung, deren bewegliche Masse gleichzeitig die Mittelebene eines Differentialkondensators bildet sowie ein Verfahren zu deren Herstellung.

Zur hochgenauen Messung von Beschleunigungen im µg-Bereich werden mikromechanische Beschleunigungssensoren in Verbindung mit kapazitiven Meßsystemen in zunehmendem Maße benutzt, um kleinste Verschiebungen, also sehr kleine Beschleunigungskräfte zu detektieren. Die Auflösungen der zugeordneten kapazitiven Meßsysteme sind zur Zeit bis in den Bereich von femto-Farad (fF) vorgestoßen.

Bei mikromechanischen Sensoren der genannten Art werden kapazitive Auslesungen aufgrund der Flachbauweise von aus Wafern geätzten Beschleunigungssensoren bevorzugt. Um die Empfindlichkeit zu vergrößern, wird meistens die Methode der Messung differentieller Kapazitätsänderungen angewendet, bei der eine mittlere Platte (ein mittlerer Wafer) sich gegen zwei äußere Platten (die Deck- und Grundwafer) linear oder drehend bewegt und die Differenz der beiden Kapazitäten ausgelesen wird. Um den Meßbereich erheblich zu vergrößern, sind in der Mikromechanik elektrostatische Rückstellverfahren bekannt, bei denen die Feldkräfte zwischen den Kondensatorplatten zur Rückstellung der Bewegung der mittleren Platte, also der ausgelenkten Masse, benutzt werden. Dabei kann die Rückstellung durch eine Regelung der Feldstärke oder durch digitale Regelung der Zeitdauer (z.B. Puls-/Weiten-Regelung) erfolgen, während der eine konstante Feldstärke anliegt. In allen Systemen der genannten Art, die mit kapazitiver Auslesung arbeiten, wird eine möglichst geringe Streukapazität benötigt.

In der Mikromechanik werden solche Differentialkondensatoren häufig durch zwei auf Glasplatten aufgebrachte Metallelektroden und eine Siliziumscheibe verwirklicht, die zwischen den beiden Glasplatten durch anodisches Bonden befestigt ist. Die bewegliche Mittelelektrode, also die pendelartig durch Trägheitskräfte auszulenkende Masse, wird in diesem Fall in die Siliziumscheibe eingeätzt und ist elektrisch mit dem sie umgebenden Siliziumrahmen verbunden. Bei dieser Art von Meßsystemen sind jedoch durch die relativ großen Flächen des Siliziumrahmens im Vergleich zu den umgebenden stromführenden Bauteilen die Streukapazitäten in der gleichen Größenordnung wie oder sogar größer als die Nutzkapazitäten. Weitere Schwierigkeiten ergeben sich daraus, daß es trotz großer Bemühungen bisher nicht gelungen ist, einen Glaswerkstoff zu entwickeln, dessen Ausdehnungskoeffizient über einen weiten Temperaturbereich dem von Silizium als dem bevorzugten einkristallinen Wafermaterial angepaßt ist, der sich strukturieren und der sich außerdem durch Bonden mit dem Wafermaterial verbinden läßt.

Um die sich aus den unterschiedlichen Ausdehnungskoeffizienten ergebenden Schwierigkeiten zu verkleinern, werden der Grund- und der Deckwafer oft aus Silizium-Wafern mit dünnen Glasbeschichtungen aufgebaut. Nachteilig ist jedoch bei jeder Glasisolierung, daß Leiterbahnen für die äußeren Elektroden durch die Bondränder zu führen sind, die außerdem einen hermetischen Abschluß des Innenraums von der Umgebung gewährleisten müssen. Es gibt zwar Lösungen, bei denen die Leiterbahnen in Kanälen geführt werden, die nachträglich durch Eingießen von Kunststoff verschlossen werden. Bei dieser Art der Zuleitung ist jedoch die Dichtigkeit, insbesondere über längere Zeiträume und bei großen Temperaturunterschieden nicht zu gewährleisten.

Beispiele für bekannte Sensorkonstruktionen finden sich in EP-A-369 352.

Der Erfindung liegt damit die Aufgabe zugrunde, eine hochgenaue Meßeinrichtung mit kapazitiverAuslesung für Beschleunigungen zu schaffen, die hermetisch abgeschlossen ist, bei der Streukapazitäten weitgehend vermieden werden und bei der mechanische Spannungen aufgrund unterschiedlicher Wärmeausdehnungskoeffizienten nicht auftreten.

Die Erfindung besteht bei einem Verfahren zur Herstellung einer mikromechanischen Beschleunigungsmeßvorrichtung, deren bewegliche Masse gleichzeitig die Mittelelektrode eines Differentialkondensators bildet, darin, daß die Beschleunigungsmeßvorrichtung als ein Schichtverbund aus mehreren Halbleiterwafern in folgenden Verfahrensschritten hergestellt wird:
- eine obere und eine untere Deckplatte werden durch Aufeinanderbonden von je zwei unstrukturierten, allseitig bzw. einseitig oxidierten Wafern vorbereitet, wobei der jeweils innere Wafer eine Isolierplatte bildet,
- nach Maskenabdeckung werden einerseits in der Deckplatte und in der Grundplatte bis zur jeweiligen Isolierplatte reichende Kontaktfenster für eine der beweglichen Masse bzw. Mittelelektrode jeweils gegenüberstehende Gegenelektrode durch anisotropes Ätzen erzeugt, welche Gegenelektrode andererseits ebenfalls durch anisotropes Ätzen aus der jeweiligen Isolierplatte freigelegt wird,
- in einer zwischen den mit den Isolierplatten versehenen Deckplatten anzuordnenden mittleren Halbleiterwaferschicht wird nach entsprechender Maskenabdeckung durch anisotropes Ätzen eine einseitig angelenkte, senkrecht zur Waferebene, bewegliche plattenförmige Masse ausgebildet, und
- die obere und die untere Deckplatte werden samt zugeordneter Isolierplatte mit der mittleren, die bewegliche Masse enthaltenden Halbleiterwaferschicht durch Halbleiterfusionsbonden hermetisch abdichtend zu dem Schichtverbund verbunden.

Um eine störungsfreie elektrische Kontaktierung der Gegenelektroden zu ermöglichen, ist es vorteilhaft, die durch anisotropes Ätzen hergestellten Kontaktfenster durch nachträgliches Bilden einer Halbleitermaterialoxidschicht gegen die Deck- bzw. Grundplatte zu isolieren.

Um eine optimale elektrische Kontaktierung der einzelnen - in der Regel fünf - Halbleiterwaferschichten des Schichtaufbaus zu ermöglichen, ist weiterhin erfindungsgemäß vorgesehen durch anisotropes Abätzen der einzelnen Waferschichten im Bereich jeweils einer Kante eine Treppenstruktur entlang der entsprechenden Kante des Schichtaufbaus zu bilden, über deren jeweilige Stufenabsätze oder Stufenplateaus die Kontaktierung der einzelnen Halbleiterschichten durch selektives Aufbringen einer Metallisierung erfolgt, die durch Drahtbonden mit Anschlußdrähten zu versehen sind. Das kantenseitige Abätzen der einzelnen Waferscheiben kann gleichzeitig mit den für die jeweiligen Waferscheiben bestimmten Ätzschritten erfolgen.

Die vorbereiteten Schichten aus Deck- und Grundplatte, jeweils mit zugeordneter rahmenartiger Isolierplatte und der mit der auslenkbaren Masse versehenen Mittelplatte, werden vorzugsweise unter Vakuum durch Halbleiterfusionsbonden zu dem hermetisch nach außen abgeschlossenen Schichtverbund fertiggestellt.

Die Erfindung macht sich bekanntgewordene Bestrebungen der Mikromechanik zunutze, mit dem Gedanken für die Gegenelektroden tragenden Grund- und Deckschichten sowie für die mittlere Waferschicht nur noch ein Material zu benutzen. Hierbei ist in erster Linie an einkristallines Halbleitermaterial zu denken und für viele Zwecke wird Silizium als gängigstes Halbleitermaterial aufgrund seiner guten Ätzselektivität bevorzugt. Die Isolierung der einzelnen Schichten gegeneinander wird im Falle der Erfindung durch bondfähige Schichten, insbesondere aus Siliziumdioxid übernommen. Siliziumdioxid hat zwar unterschiedliche thermische und mechanische Eigenschaften zum Silizium. Überraschenderweise hat sich jedoch gezeigt, daß die oben geschilderten technologischen Probleme sich dann beherrschen lassen, wenn sehr dünne Halbleitermaterialoxidschichten aufgebracht werden.

Eine mikromechanische Beschleunigungsmeßvorrichtung, deren beweglich aufgehängte Masse gleichzeitig die Mittelelektrode eines Differentialkondensators bildet, ist erfindungsgemäß gekennzeichnet durch einen mehrlagigen, plattenartigen, durch Waferbonden hermetisch nach außen abgeschlossenen Schichtaufbau aus unterschiedlich geätzten, gegeneinander durch dünne Halbleitermaterialoxidschichten isolierten Halbleiterwafern, wobei
- eine Deckplatte mit einer darunter angeordneten oberen, rahmenartigen Isolierplatte sowie eine Grundplatte und eine darüber angeordnete untere rahmenartige Isolierplatte jeweils durch zwei allseitig bzw. einseitig oxidierte Halbleiterwafer gebildet und Deck- und Grundplatte mit der jeweils zugeordneten Isolierplatte durch Aufeinanderbonden verbunden sind,
- Deck- und Grundplatte jeweils innenseitig mit einer durch den Rahmen der zugeordneten Isolierplatte als Abschirmung allseits randseitig umgebenen, und gegen die zugeordnete Deck- bzw. Grundplatte durch eine dazwischenliegende Halbleitermaterialoxidschicht isolierten Gegenelektrode versehen sind, und
- zwischen der jeweils mit der rahmenartigen Isolierplatte versehenen Deck- und der Grundplatte eine rahmenartige Mittelplatte angeordnet ist, welche die an einem Rahmenholm einseitig durch wenigstens einen, vorzugsweise jedoch mehrere Verbindungsstege angelenkte, einstückig mit dem Rahmen verbundene, senkrecht zur Plattenebene auslenkbare, plattenartige Masse aufweist, die gleichzeitig in Gegenüberstellung und Ausrichtung auf die Gegenelektroden die bewegliche Mittelelektrode des Differentialkondensators bildet.

Eine vorteilhafte Kontakierungsmöglichkeit für die einzelnen Halbleiterwaferschichten ergibt sich dann, wenn diese Wafer stufenartig versetzt abgeätzt sind und entlang einer Kante partiell freiliegen, so daß auf dem jeweils freiliegenden Stufenplateu durch Anbringen eines entsprechenden Metallpads mit angebondetem Anschlußdraht ein elektrischer Kontakt gegeben ist. Diese Art der Kontaktierung ist insbesondere für den Einbau der mikromechanischen Meßvorrichtung in genormte Gehäuse und/oder genormte Kontaktraster von elektrischen Leiterplatten von besonderem Vorteil. Es sind jedoch noch andere Anordnungen der Stufen denkbar, z.B. können die Anschlußpads an den vier Ecken des Beschleunigungsmessers angebracht werden.

Bei der erfindungsgemäßen Konstruktion des Differentialkondensators sind also der Deck- und der Grundwafer aus je zwei Halbleiter-, vorzugsweise Siliziumscheiben, zusammengesetzt, die gegeneinander isoliert sind. Die beiden isolierten Teile des Deck- und Grundwafers sind geometrisch so ausgebildet, daß ein jeweils erster Teilbereich den Rahmen der Mittelelektrode und ein zweiter Teilbereich der beweglichen Elektrode als Kapazitätsplatte, also als Gegenelektrode gegenüberliegt. Grund- und Deckwafer sind mit dem Mittelwafer an den äußeren Rahmenteilen der Gegenelektroden mechanisch verbunden und elektrisch isoliert.

Eine erfindungsgemäße Beschleunigungsmeßvorrichtung mit kapazitiver Auslesung hat gegenüber bekannten Systemen dieser Art die folgenden Vorteile:
- Bei zweckmäßiger Beschaltung lassen sich die effektiven Streukapazitäten durch die Anordnung der allseitigen Abschirmungen extrem gering halten.
- Die Temperaturausdehnungskoeffizienten sind in allen Bauteilen gleich, da alle Bauteile aus dem gleichen Material hergestellt sind.
- Durch Halbleiter-, insbesondere Siliziumfusionsbonding über die Halbleiteroxidschichten wird eine hohe Festigkeit des Schichtaufbaus und eine hohe Dichtigkeit der Meßvorrichtung erreicht.
- Die Zuleitungen zu den äußeren Elektroden, den Abschirmungen und zur Mittelelektrode erfolgen über die Materialgrundleitfähigkeit bzw. durch selbstjustierende, hochschmelzende Metalle oder Silizide.
- Vorteilhaft ist es weiterhin, die Deck- und Grundwafer mit niedriger Leitfähigkeit auszustatten, um die elektrische Zeitkonstante der Streukapazität zu vergrößern. Die Zuleitungen zur Elektrode können durch Metallbeschichtungen niederohmig gehalten werden.
- Die Struktur des Schichtaufbaus ist insgesamt vergleichsweise einfach mittels anisotroper Ätzprozesse herstellbar.
- Alle Metallisierungen für die einzelnen Ebenen lassen sich gleichzeitig durch Metallabscheidung von Kontaktpads auf die Plateaus von stufenförmig versetzten Kontaktbereichen vergleichsweise einfach aufbringen.

Die Erfindung und vorteilhafte Einzelheiten werden nachfolgend unter Bezug auf ein Ausführungsbeispiel anhand der Zeichnung näher erläutert. Es zeigen:
- **Fig. 1**: in auseinandergezogener schematischer Perspektivdarstellung (Explosionsdarstellung) den Schichtaufbau eines erfindungsgemäßen mikromechanischen Beschleunigungsmessers mit kapazitiver Auslesung,
- **Fig. 2**: in ebenfalls auseinandergezogenerTeilschnittdarstellung einen wesentlichen Abschnitt eines mikromechanischen Beschleunigungsmessers erfindungsgemäßer Bauart, und
- **Fig. 3**: die Blockbilddarstellung eines erfindungsgemäßen Beschleunigungsmessers innerhalb eines Closed-Loop-Meßkreises.

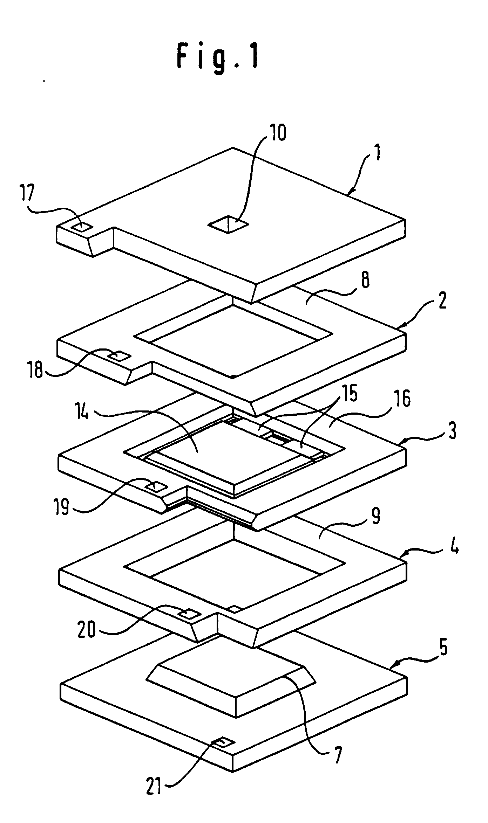

Die Explosionsdarstellung der Fig. 1 zeigt fünf übereinander angeordnete Halbleiterwafer, nämlich von oben nach unten eine Deckplatte 1 mit (in Fig. 1 nicht sichtbarer) ersten Gegenelektrode 6, eine obere Isolierplatte 2 mit Rahmen 8, eine Mittelplatte 3, in deren freiem Mittelbereich die einstückig mit dem zugeordneten Mittelrahmen 16 über Stege 15 verbundene, pendelartig auslenkbare Masse 14 angeordnet ist, die gleichzeitig die bewegliche Elektrode der Differentialkondensatorkonstruktion bildet sowie annähernd spiegelsymmetrisch eine untere Isolierplatte 4 mit Rahmen 9 und eine Grundplatte 5 mit der zweiten feststehenden Gegenelektrode 7, die in den freien Bereich innerhalb des Rahmens 9 der unteren Isolierplatte 4 hineinragt. Im Bereich der oberen (ersten) feststehenden Gegenelektrode 6 bzw. der unteren (zweiten) feststehenden Gegenelektrode 7 sind die Deckplatte 1 bzw. die Grundplatte 5 mit durch anisotropes Ätzen hergestellten Kontaktfenstern 10 bzw. 11 versehen, die gegen die Deckplatte 1 bzw. gegen die Grundplatte 5 durch eine dünne Halbleitermaterialoxidschicht 12 bzw. 13 isoliert sind. Die jeweiligen Halbleitermaterialoxidschichten 12, 13 werden im Grabenboden der Kontaktfenster 10, 11 bis zur jeweiligen Gegenelektrode 6, 7 durchgeätzt. Diese so freigelegten Stellen sind spätere Kontaktstellen und werden anschließend metallisiert, wobei die Metallschicht die Oxidschicht an den Rändern 22 bzw. 23 überdeckt. Die Kontaktierung der feststehenden Gegenelektroden 6 und 7 kann auch durch eine die Oxidschichten 12 bzw. 13 durchsetzende Metallisierung mit daran angebondeten Kontanktdrähten (nicht dargestellt) erfolgen, wobei es zweckmäßig ist, die Wafer von Grund- und Deckplatte mit niedriger Leitfähigkeit auszustatten, um zusätzlich die elektrische Zeitkonstante der Streukapazität zu vergrößern.

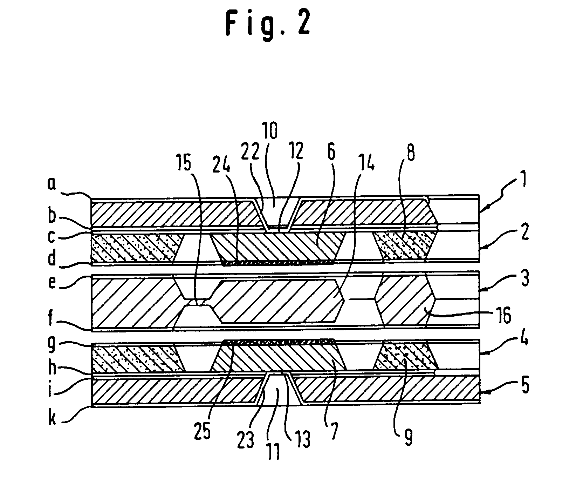

Die Isolierplatten 2 bzw. 4 bilden durch ihre rahmenartige Struktur, d.h. über die Rahmen 8 bzw. 9, die von außen unmittelbar kontaktierbar sind, Abschirmungen für die Gegenelektroden 6 bzw. 7. Die bewegliche Mittelelektrode, also die Masse 14 ist andererseits durch den diese umgebenden Rahmen 16 abgeschirmt. Wie sich aus Fig. 2 ersehen läßt, sind die einzelnen, plattenartigen Halbleiterschichten gegeneinander durch dazwischenliegende Halbleitermaterialoxidschichten a bis k isoliert. Die der mittleren Halbleiterwaferschicht 3 jeweils zugewandten Flächen der Gegenelektroden 6 bzw. 7 werden in einem Maskierungsschritt mit Siliziumoxid bzw. Siliziumnitrid beschichtet.

Zur Herstellung eines ersten Verbundteils aus Deckplatte 1 und Isolierplatte 2 sowie eines zweiten Verbundteils aus der Grundplatte 5 und der unteren Isolierplatte 4 werden je zwei unstrukturierte, allseitig bzw. einseitig oxidierte Waferscheiben aufeinander gebondet. Nach einer geeigneten Maskenabdeckung werden sodann mittels anisotroper Ätzprozesse die Deckplatte 1 mit der aus dem Material der Isolierplatte 2 herausgeätzten oberen Gegenelektrode 6 bzw. die Grundplatte 5 mit der unteren Gegenelektrode 7 geformt. Bei diesem Ätzprozess werden gleichzeitig die Kontaktfenster 10 und 11 zu den Gegenelektroden 6 und 7 hergestellt. Das Mittelstück 3, also der die bewegliche Masse 14 tragende Mittelrahmen 16 wird ebenfalls durch Maskenabdeckung und anisotrope Ätzverfahren so geformt, daß die als Pendel wirkende Masse 14 über zwei oder mehr federnde Verbindungsstege 15 mit dem Rahmen 16 verbunden bleibt und damit einen vorgegebenen Freiheitsgrad besitzt.

Wie die Fig. 1 erkennen läßt, weisen alle Waferplatten 1 bis 5 auf der jeweils gleichen Seite einen Ansatz auf, der jedoch bei der Deckplatte 1 die kürzeste Länge besitzt und bei der Grundplatte 5 über die gesamte Breite dieses Waferbauteils reicht. Bei der aufeinandergelegten Anordnung entsteht so eine treppenartige Struktur, über deren einzelne Treppenplateaus die Kontaktierung erfolgen kann durch Anbringen von Metallisierungen als Kontaktpads 17 bis 21. An diese Kontaktpads werden in einem weiteren Prozeßschritt Kontaktdrähte durch Bonden angebracht.

Zum Anschließen des Pendels der Masse 14 wird der Kontaktpad 19 auf dem Rahmen benutzt. Anschließend werden das Oberteil aus Deckplatte 1 und Isolierplatte 2 sowie das Unterteil aus Grundplatte 5 und Isolierplatte 4 mit dem fertig geformten Mittelteil 3 durch Halbleiterfusionsbondung, insbesondere unter Vakuum verbunden und hermetisch abgeschlossen. Das Halbleiterfusionsbonden kann auch unter Luftdruck oder unter Überdruck mit zusätzlichem Gas, insbesondere unter Schutzgas erfolgen. Die konstruktive Gestaltung des erfindungsgemäßen mikromechanischen Beschleunigungsmessers erlaubt damit die Kontaktierung aller Elektroden und Isolierschichten durch Drahtbonden von der Oberseite aus.

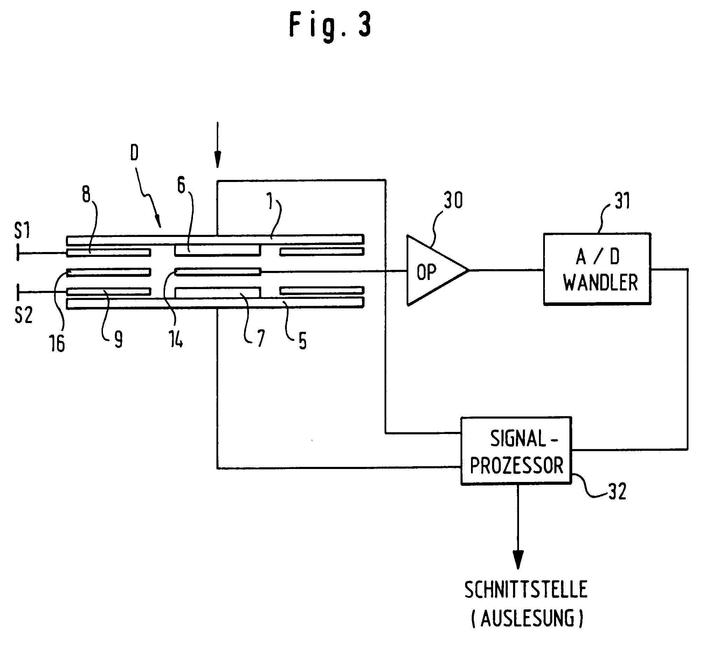

Eine komplettierte Beschleunigungsmeßeinrichtung mit dem erfindungsgemäßen mikromechanischen Beschleunigungsmesser wird in der Regel innerhalb eines geschlossenen Regelkreises arbeiten, wobei über die Regelelektronik die bewegliche Masse 14 über elektrostatische Kräfte gefesselt, also jeweils rückgestellt wird. Die Blockbilddarstellung der Fig. 3 zeigt ein Beschaltungsbeispiel für den als Differenzialkondensator D gestalteten Beschleunigungsmesser erfindungsgemäßer Art innerhalb eines geschlossenen Regelkreises (Closed-Loop).

Eine Beschleunigung entlang einer durch einen Pfeil veranschaulichten Eingangsachse bewirkt eine Auslenkung des Pendels, d.h. der beweglichen Masse 14, die von dem Differentialkondensator D erfaßt wird. Das Signal des Abgriffs wird über einen Vorverstärker 30 und einen A/D-Wandler 31 einem Signalprozessor 32 zugeführt. Der Signalprozessor 32 berechnet den optimalen Schaltzeitpunkt für ein pulsweitenmoduliertes Signal, das über (nicht dargestellte) Treiberstufen dem Differentialkondensator D als elektrostatischem Stellglied zugeführt wird. Die Signale werden vom Signalprozessor 32 so berechnet, daß die Rückstellung des Pendels unter statischen und dynamischen Betriebsbedingungen auf einem Optimum gehalten wird.

## Patentansprüche

1. Verfahren zur Herstellung einer mikromechanischen Beschleunigungsmeßvorrichtung, deren bewegliche Masse (14) gleichzeitig die Mittelelektrode eines Differentialkondensators bildet, **dadurch gekennzeichnet**, daß die Beschleunigungsmeßvorrichtung als ein Schichtverbund aus mehreren plattenartigen Halbleiterwafern in folgenden Verfahrensschritten hergestellt wird:
- ein oberer Verbundteil (1, 2) und ein unterer Verbundteil (4, 5) werden durch Aneinanderbonden von je zwei unstrukturierten, oxidierten Wafern vorbereitet, wobei der jeweils innere Wafer eine Isolierplatte (2, 4) und der äußere Wafer eine Grundplatte (5) bzw. eine Deckplatte (1) bildet;
- nach Maskenabdeckung werden einerseits in der Deckplatte (1) und in der Grundplatte (5) bis zur jeweiligen Isolierplatte (2, 4) reichende Kontaktfenster (10, 11) für eine der beweglichen Masse (14) bzw. Mittelelektrode jeweils gegenüberstehende Gegenelektrode (6, 7) durch anisotropes Ätzen erzeugt, welche Gegenelektrode andererseits ebenfalls durch anisotropes Ätzen aus der jeweiligen Isolierplatte freigelegt wird,
- in einen zwischen den mit den Isolierplatten (2, 4) versehenen Deck-(1) bzw. Grundplatte (5) anzuordnenden mittleren Halbleiterwafer (3) wird, nach entsprechender Maskenabdeckung, durch anisotropes Ätzen eine einseitig angelenkte, senkrecht zur Waferebene bewegliche, plattenförmige Masse (14) ausgebildet,
- die Deckplatte (1) und die Grundplatte (5) werden samt zugeordneter Isolierplatte (2, 4) mit dem mittleren, die bewegliche Masse (14) enthaltenden Halbleiterwafer (3) durch Halbleiterfusionsbonding hermetisch abdichtend zu dem Schichtverbund verbunden.

2. Verfahren nach Anspruch 1, **dadurch gekennzeichnet**, daß die Kontaktfenster (10, 11) durch die Deck- (1) und Grundplatte (5) zu den Gegenelektroden (6, 7) durch Bilden einer Halbleitermaterialoxidschicht gegen die Grund- bzw. Deckplatte elektrisch isoliert werden.

3. Verfahren nach Anspruch 1 oder 2, **dadurch gekennzeichnet**, daß die dem mittleren Halbleiterwafer (3) jeweils zugewandten Flächen der Gegenelektroden (6, 7) in einem Maskierungsschritt mit Siliciumoxid oder Siliciumnitrid beschichtet (24, 25) werden.

4. Verfahren nach einem der vorstehenden Ansprüche, **dadurch gekennzeichnet**, daß durch anisotropes Abätzen der einzelnen Wafer im Bereich jeweils einer Kante eine Treppenstruktur entlang einer Kante des Schichtverbunds gebildet wird, über deren jeweilige Stufenabsätze die Kontaktierung der einzelnen Halbleiterschichten durch selektives Aufbringen einer mit Anschlußdrähten durch Bonden zu versehenden Metallisierung (17 bis 21) erfolgt.

5. Verfahren nach Anspruch 4, **dadurch gekennzeichnet**, daß die kantenseitige Abstufung der einzelnen Wafer gleichzeitig mit den den jeweiligen Wafern zugeordneten Ätzschritten erfolgt.

6. Verfahren nach Anspruch 1, **dadurch gekennzeichnet**, daß das hermetische Verbinden der einzelnen Halbleiterschichten zu dem Schichtverbund durch Halbleiterfusionsbonding unter Vakuum erfolgt.

7. Verfahren nach Anspruch 1, **dadurch gekennzeichnet**, daß das hermetische Verbinden der einzelnen Halbleiterschichten zu dem Schichtverbund durch Halbleiterfusionsbonden unter Umgebungsdruck in Luft oder unter Druck, insbesondere unter Schutzgasüberdruck erfolgt.

8. Verfahren nach einem der vorstehenden Ansprüche, **dadurch gekennzeichnet**, daß als Halbleiterwafer solche aus einkristallinem Halbleitermaterial verwendet werden.

9. Verfahren nach Anspruch 8, **dadurch gekennzeichnet**, daß als Halbleiterwafer einkristalline Siliziumwafer verwendet werden.

10. Verfahren nach einem der vorstehenden Ansprüche, **dadurch gekennzeichnet**, daß die Deckplatte (1) und die Grundplatte (5) aus einem Wafer mit geringer Leitfähigkeit hergestellt werden.

11. Mikromechanische Beschleunigungsmeßvorrichtung, deren beweglich aufgehängte Masse (14) gleichzeitig die Mittelelektrode eines Differentialkondensators bildet, **gekennzeichnet** durch einen mehrlagigen, vorzugsweise fünflagigen, plattenartigen, durch Waferbonden hermetisch nach außen abgeschlossenen Schichtaufbau aus unterschiedlich geätzten, gegeneinander durch Halbleitermaterialoxidschichten isolierten Halbleiterwafern, wobei
- eine Deckplatte (1) mit einer darunter angeordneten, oberen rahmenartigen Isolierplatte (2) sowie eine Grundplatte (5) mit einer darüber angeordneten, unteren rahmenartigen Isolierplatte (4) jeweils durch zwei oxidierte Halbleiterwafer gebildet und Deck- (1) und Grundplatte (5) mit der jeweils zugeordneten Isolierplatte (2 bzw. 4) durch Aufeinanderbonden verbunden sind,
- Deck- und Grundplatte (1, 5) jeweils innenseitig mit einer durch den Rahmen (8, 9) der zugeordneten Isolierplatte (2, 4) als Abschirmung allseits randseitig umgebenen und gegen die zugeordnete Deck- bzw. Grundplatte durch eine dazwischenliegende Halbleitermaterialoxidschicht isolierten Gegenelektroden (6, 7) versehen sind, und
- zwischen der jeweils mit der zugeordneten rahmenartigen Isolierplatte (2, 4) versehenen Deck- (1) und der Grundplatte (5) eine rahmenartige Mittelplatte (3) angeordnet ist, welche die an einem Rahmenholm einseitig angelenkte, einstückig mit dem Rahmen (16) verbundene, senkrecht zur Plattenebene auslenkbare plattenartige Masse (14) als Pendel aufweist, die gleichzeitig in Gegenüberstellung und Ausrichtung auf die Gegenelektrode (6, 7) die bewegliche Mittelelektrode des Differentialkondensators bildet.

12. Mikromechanische Beschleunigungsmeßvorrichtung nach Anspruch 11, **dadurch gekennzeichnet**, daß die Kontaktfenster (10, 11) für die Gegenelektroden (6, 7) gegen die Deck- (1) bzw. die Grundplatte (5) durch eine Halbleitermaterialoxidschicht isoliert sind.

13. Mikromechanische Beschleunigungsmeßvorrichtung nach Anspruch 11 oder 12, **dadurch gekennzeichnet**, daß die einzelnen, plattenartigen Halbleiterwafer einzeln von einer Seite des Schichtaufbaus kontaktierbar sind.

14. Mikromechanische Beschleunigungsmeßvorrichtung nach Anspruch 13, **dadurch gekennzeichnet,** daß die einzelnen Halbleiterwafer durch stufenartig versetztes Abätzen entlang einer Kante freigelegt und auf dem jeweils freiliegenden Stufenplateau durch ein jeweils zugeordnetes Metallpad (17 bis 21) mit aufgebondetem Anschlußdraht elektrisch kontaktierbar sind.

15. Mikromechanische Beschleunigungsmeßvorrichtung nach einem der Ansprüche 11 bis 14, **dadurch gekennzeichnet**, daß mindestens die Flächen der der auslenkbaren plattenartigen Masse (14) zugewandten Flächen der Gegenelektroden (6, 7) mit Siliciumoxid oder Siliciumnitrid beschichtet sind.

## Claims

1. Method for the production of a micromechanical accelerometer, the movable mass of which (14) at the same time forms the central electrode of a differential capacitor, characterized in that the accelerometer is produced as a layered composite of a plurality of plate-like semiconductor wafers in the following method steps:
- an upper connecting device (1, 2) and a lower connecting device (4, 5) are prepared by bonding together a pair of unstructured, oxydized wafers for each connecting device, whereby the respective inner wafer forms an insulating plate (2, 4) and the outside wafer forms a baseplate (5) and a coverplate (1), respectively;
- after masking, on the one hand contact windows (10, 11) extending to the respective insulating plate (2, 4) are generated in the coverplate (1) and in the baseplate (5) by anisotropic etching for that one of the counterelectrodes (6, 7) facing the movable mass (14) and the central electrode, respectively, whereas on the other hand said counterelectrode is also exposed from the respective insulating plate by anisotropic etching,
- after appropriate masking a unilaterally linked plate shaped mass (14), which is movable perpendicularly to the wafer plane, is formed in a central semiconductor wafer (3) which is arranged between the coverplate (1) and the baseplate (5) both provided with the insulating plates (2, 4),
- the coverplate (1) and the baseplate (5) together with the associated insulating plate (2, 4) are connected in a hermetically sealed fashion to the central semiconductor wafer (3) containing the movable mass (14), by semiconductor fusion bonding, to form the layered composite.

2. Method according to Claim 1, characterized in that the contact windows (10, 11) through the coverplate (1) and baseplate (5) to the counterelectrodes (6, 7) are electrically insulated from the baseplate and coverplate, respectively by formation of a semiconductor material oxide layer.

3. Method according to Claim 1 or 2, characterized in that the surfaces of the relevant counterelectrodes (6, 7) facing the central semiconductor wafer (3) are coated (24, 25) with silica or silicon nitride in a masking step.

4. Method according to one of the preceding claims, characterized in that a step structure is formed by anisotropic etching-away of the individual wafers in the region of the relevant edge along one edge of the layered composite, whereby the contacting of the individual semiconductor layers takes place via the respective step sections by selective application of a metalization (17 to 21) to be provided with connecting wires by bonding.

5. Method according to Claim 4, characterized in that the edge-sided stepping of the individual wafers takes place at the same time as the etching steps allocated to the respective wafers.

6. Method according to Claim 1, characterized in that the hermetic connection of the individual semiconductor layers to the layered composite takes place by semiconductor fusion bonding under vacuum.

7. Method according to Claim 1, characterized in that the hermetic connection of the individual semiconductor layers to the layered composite takes place by semiconductor fusion bonding under ambient pressure in the air or under pressure, especially under protective-gas excess pressure.

8. Method according to one of the preceding claims, characterized in that the semiconductor wafers employed are made of monocrystalline semiconductor material.

9. Method according to Claim 8, characterized in that monocrystalline silicon wafers are employed as semiconductor wafers.

10. Method according to one of the preceding claims, characterized in that the coverplate (1) and the baseplate (5) are produced from a wafer having low conductivity.

11. Micromechanical accelerometer, the movably suspended mass (14) of which at the same time forms the central electrode of a differential capacitor, characterized by a multilayer, preferably five-layered, plate-like layered structure, hermetically sealed to the outside by wafer bonding, of differently etched semiconductor wafers insulated from one another by semiconductor material oxide layers, whereby
- a coverplate (1) with an upper, frame-like insulating plate (2) arranged therebelow, as well as a baseplate (5) having a lower frame-like insulating plate (4) arranged thereabove are each formed by two semiconductor wafers and the coverplate (1) and baseplate (5) are connected to the respectively associated insulating plate (2 and 4, respectively) by bonding to one another,
- each of the coverplate and baseplate (1, 5) are provided on the inside with a counterelectrode (6, 7) surrounded on all sides by the frame (8, 9) of the allocated insulating plate (2, 4) for screening and insulated from the allocated coverplate or baseplate by a semiconductor material oxide layer placed in between, and
- a frame-like central plate (3) is arranged between the coverplate (1) and the baseplate (5), each provided with the insulating plate (2, 4) allocated thereto, which exhibits the plate-like mass (14) which is integrally formed with the frame (16) and attached to the frame spar on one side so that it hinges out perpendicularly to the plane plate as a pendulum and which at the same time forms the movable central electrode of the differential capacitor, in opposition to and alignment with the counterelectrode (6, 7).

12. Micromechanical accelerometer according to Claim 11, characterized in that the contact windows (10, 11) for the counterelectrodes (6, 7) are insulated from the coverplate (1) and the baseplate (5), respectively by a semiconductor material oxide layer.

13. Micromechanical accelerometer according to Claim 11 or 12, characterized in that the individual, plate-like semiconductor wafers can be contacted individually from one side of the layered structure.

14. Micromechanical accelerometer according to Claim 13, characterized in that the individual semiconductor wafers are exposed along one edge by step section etching-away and are electrically contactable on the respectively exposed step plateau by a metal pad (17 to 21) allocated thereto with a bonded-on connecting wire.

15. Micromechanical accelerometer according to one of Claims 11 to 14, characterized in that at least those surfaces of the surfaces of the counterelectrodes (6, 7) which face the deflectable plate-like mass (14) are coated with silica or silicon nitride.

## Revendications

1. Procédé de fabrication d'un accéléromètre micromécanique dont la masse mobile (14) forme en même temps l'électrode médiane d'un condensateur différentiel, c a r a c t é r i s é e n ce que l'accéléromètre est réalisé par les opérations de base suivantes sous la forme d'une structure de couches composite composée de plusieurs tranches de semi-conducteur en forme de plaquettes :
- une partie supérieure (1, 2) de la structure composite et une partie inférieure (4, 5) de la structure composite sont préparées par le soudage de respectivement deux tranches oxydées non structurées, la tranche respectivement intérieure formant une plaque isolante (2, 4) et la tranche extérieure formant une plaque de base (5) et respectivement une plaque de recouvrement (1) ;
- après le masquage, des fenêtres de contact (10, 11) pour une contre-électrode (6, 7) placée à chaque fois en face de la masse mobile (14) et respectivement de l'électrode médiane, qui s'étendent jusqu'à la plaque isolante (2, 4) respective sont d'une part produites par gravure anisotrope dans la plaque de recouvrement (1) et dans la plaque de base (5), ladite contre-électrode étant d'autre part dégagée également par gravure anisotrope dans la plaque isolante,
- dans une tranche de semi-conducteur médiane (3) devant être disposée entre les plaques de recouvrement (1) et respectivement de base (5) munies des plaques isolantes (2, 4) est réalisé, après masquage adéquat, par gravure anisotrope, une masse (14) mobile en forme de plaque articulée unilatéralement,
- la plaque de recouvrement (1) et la plaque de base (5), y compris la plaque isolante (2, 4) associée, sont réunies, par soudage par fusion de semi-conducteur, de manière totalement étanche, à la tranche de semi-conducteur médiane (3) contenant la masse mobile (14) de facon à former la structure de couches composite.

2. Procédé selon la revendication 1, caractérisé en ce que les plaques de recouvrement (1) et de base (5) isolent les fenêtres de contact (10, 11) électriquement des contre-électrodes (6, 7) par la formation d'une couche d'oxyde de semi-conducteur appliquée sur la plaque de base et respectivement de recouvrement.

3. Procédé selon la revendication 1 ou 2, caractérisé en ce que les surfaces des contre-électrodes (6, 7) respectivement tournées vers la tranche de semi-conducteur médiane (3) sont revêtues au cours d'une opération de masquage, d'oxyde de silicium ou de nitrure de silicium (24, 25).

4. Procédé selon l'une des revendications précédentes, caractérisé en ce que, par gravure anisotrope des différentes tranches dans la zone de respectivement une arête, une structure en escalier est formée le long d'une arête de la structure de couches composite, sur les échelons de laquelle s'effectue l'établissement des contacts des différentes couches de semi-conducteur par application sélective d'une métallisation (17 à 21) devant être munie, par soudage, des fils de raccordement.

5. Procédé selon la revendication 4, caractérisé en ce que l'échelonnement des différentes tranches du côté arête se fait simultanément avec les opérations de gravure associées aux tranches respectives.

6. Procédé selon la revendication 1, caractérisé en ce que la liaison hermétique des différentes couches de semi-conducteur en structure de couches composite se fait sous vide.

7. Procédé selon la revendication 1, caractérisé en ce que la liaison hermétique des différentes couches de semi-conducteur en structure de couches composite se fait par soudage par fusion de semi-conducteur à la pression ambiante dans l'air ou sous pression, notamment sous surpression de gaz protecteur.

8. Procédé selon l'une des revendications précédentes, caractérisé en ce que des matériaux semi-conducteurs monocristallins sont utilisés comme tranches de semi-conducteur.

9. Procédé selon la revendication 8, caractérisé en ce que des tranches de silicium monocristallin sont utilisées comme tranches de semi-conducteur.

10. Procédé selon l'une des revendications précédentes, caractérisé en ce que la plaque de recouvrement (1) et la plaque de base (5) sont réalisées à partir d'une tranche à faible conductibilité.

11. Accéléromètre micromécanique dont la masse (14) suspendue de manière mobile forme en même temps l'électrode médiane d'un condensateur différentiel, **caractérisé en** ce qu'il présente une structure stratifiée à plusieurs couches, de préférence à cinq couches, en forme de plaques, fermée hermétiquement vers l'extérieur par soudage de tranches et constituée de tranches de semi-conducteur gravées différemment et isolées les unes des autres par des couches d'oxydes de matériaux semi-conducteurs,
- une plaque de recouvrement (1) avec une plaque isolante (2) supérieure en forme de cadre placée sous cette dernière ainsi qu'une plaque de base (5) avec une plaque isolante (4) inférieure en forme de cadre placée sur cette dernière étant constituées par deux tranches de semi-conducteur oxydées, et la plaque de recouvrement (1) et la plaque de base (5) étant à chaque fois reliées par soudage à la plaque isolante (2 ou 4) respectivement associée,
- chacune des plaques de recouvrement et de base (1, 5) étant munie du côté intérieur d'une contre-électrode (6, 7) entourée tout autour comme blindage par le cadre (8, 9) de la plaque isolante (2, 4) associée et isolée par rapport à la plaque de recouvrement et respectivement de base associée par une couche d'oxyde de matériau semi-conducteur intermédiaire, et
- entre la plaque de recouvrement (1) et la plaque de base (5) munies chacune de la plaque isolante (2, 4) associée en forme de cadre étant disposée une plaque médiane (3) en forme de cadre qui comporte comme pendule la masse (14) en forme de plaque articulée unilatéralement sur l'un des longerons du cadre, reliée en une seule pièce au cadre (16) et pouvant être déviée perpendiculairement au plan de la plaque, laquelle constitue en même temps, en opposition et en alignement avec la contre-électrode (6, 7), l'électrode médiane mobile du condensateur différentiel.

12. Accéléromètre micromécanique selon la revendication 11, caractérisé en ce que les fenêtres de contact (10, 11) pour les contre-électrodes (6, 7) sont isolées par rapport à la plaque de recouvrement (1) et respectivement à la plaque de base (5) par une couche d'oxyde de matériau semi-conducteur.

13. Accéléromètre micromécanique selon la revendication 11 ou 12, caractérisé en ce que l'établissement des contacts des différentes tranches de semi-conducteur en forme de plaque peut être effectué par l'un des côtés de la structure stratifiée.

14. Accéléromètre micromécanique selon la revendication 13, caractérisé en ce que les différentes tranches de semi-conducteur sont dégagées par une corrosion décalée de manière échelonnée le long d'une arête et que les contacts électriques sont établis par un pad métallique (17 à 21) respectivement associé avec fil de branchement soudé.

15. Accéléromètre micromécanique selon l'une des revendications 11 à 14, caractérisé en ce qu'au moins les surfaces des contre-électrodes (6, 7) tournées vers la masse (14) en forme de plaque déviable sont revêtues d'oxyde de silicium ou de nitrure de silicium.
